# EUROPEAN PATENT SPECIFICATION

(11) **EP 2 227 417 B1**
(45) Date of publication and mention of the grant of the patent: **18.04.2012**
(21) Application number: 07846906.1
(22) Date of filing: 29.11.2007
(51) Int. Cl.: B64F 5/00, G05B 23/02

(54) **METHOD FOR CHECKING THE OPERABILITY OF A NOSE WHEEL STEERING CONTROL UNIT IN AN AIRCRAFT**
TESTVERFAHREN ZUM ÜBERPRÜFEN DER FUNKTIONSFÄHIGKEIT EINER BUGRADLENKSTEUEREINHEIT IN EINEM FLUGZEUG
PROCÉDÉ DE CONTRÔLE DE L'OPÉRABILITÉ D'UNE UNITÉ DE DIRECTION TRAIN AVANT D'UN AVION

(43) Date of publication of application: 15.09.2010
(73) Proprietor: Airbus Operations SAS, 31060 Toulouse (FR)
(72) Inventor: GOMIERO, Daniel, F-31700 Daux (FR); MORVAN, Roger, F-31150 Gratentour (FR)
(74) Representative: Thum, Bernhard
(86) International application number: PCT/EP2007/010381
(87) International publication number: WO 2009/068067

(56) References cited:
- WO-A-2005/077754
- US-A- 3 067 832
- US-A- 3 885 759
- US-A- 4 646 255
- US-A- 4 782 292
- US-A- 5 260 874

## Description

The present invention relates to a method for checking the operability of a nose wheel steering control unit in an aircraft.

In the field of aircraft, it is necessary to block the steering function of a front steering wheel arranged at the nose of the aircraft as soon as the aircraft runs on the ground with a certain velocity, e.g. above 70 knots. This means that the nose wheel (i.e. the front wheel) of the respective aircraft must be blocked against any steering movement, even if a respective signal from the cockpit is received by the steering mechanism. The control of the nose wheel steering is performed by a nose wheel steering control unit. For safety reasons, a certain aircraft comprises two separate nose wheel steering control units which are accommodated within common single housing. Both nose wheel steering control units are adapted to control the steering of the nose wheel as well as to monitor the operation of the nose wheel steering. Both nose wheel steering control units can be used synchronously, wherein one nose wheel steering unit is in a command mode controlling the nose steering and the respective other nose wheel steering control unit is in a monitoring mode monitoring the operation of the nose steering. After each flight, the command and monitoring responsibility of the two nose wheel steering control units are changed, i.e. both nose wheel steering control units are used alternately for monitoring and controlling.

It is also common practice to use a plurality of speed sensors in order to monitor the actual speed of the nose wheel. Each speed sensor, or at least a plurality of the nose wheel speed sensors, provided in the aircraft are connected to the nose wheel steering control unit and transmit output signals thereto. Moreover, the nose wheel steering control unit can also be connected to a plurality of further components of the aircraft, for example for controlling the ground spoiler, for controlling the slats and the aileron and for outputting certain operational states by optical indicators or the like.

Document WO 2005/077754 A1 discloses a method and a system for verifying a control system of a marine vessel, wherein real sensor signals are replaced by a test sequence of artificial measurements from a test signal source. Thereby, the control system generates response signals which are stored as a control system signature. At a later time, this individual control system signature response is used to verify whether the control system is unchanged or the control system has been changed. Further, a simulation of the vessel is generated based on a mathematical model in a remote simulator in a test laboratory. This test laboratory is not on board the vessel, such that the control system of the vessel is wireless connected to the remote test laboratory.

Document US 4,646,255 A describes a gyro simulator for testing flight control systems and control surfaces of an aircraft. The gyro simulator comprises a hand-held unit, a control unit and an electronics module. This electronics module receives command input signals from the control unit and produces the simulated gyro signals which are supplied to the aircraft flight control systems. Then, the control surfaces (ailerons and elevators) are operated in response to the command input signals produced by the flight control systems. The positions of the control surfaces are sensed by sensors and transferred to the electronics module. Further, in a dynamic mode, the system is operated to simulate actual flight conditions by deploying the control surfaces using command signals from the aircraft manual controls and flight control systems.

Moreover, document US 4,782,292 A discloses a portable test system for on board testing of aircraft servoactuators. The portable test system includes a computer control system which is connected to a flight control electronics interface and to a data acquisition interface. Further, the electro-mechanical or electro-hydraulically actuator to be tested is also connected with the flight control electronics interface and with the data acquisition interface. The computer control system of the test system generates electrical signals which simulate control conditions of the aircraft in flight and receives response signals from the actuators. These received information is then compared with predetermined tolerances to ascertain the performance of the actuator.

Furthermore, document US 5,260,874 A discloses an aircraft test system for ground testing a number of aircraft components. The aircraft flight test system includes a plurality of stimuli generating instruments for producing signals which the aircraft receives when it is airborne. These stimuli generating instruments include e.g. radio frequency signal generators for generating radio frequency navigation signals. Further, the aircraft test system comprises a set of mechanical and pneumatic actuators for stimulating mechanically driven and pressure driven aircraft transducers. Moreover, air pumps supply air flows to the airspeed and barometric altimeter transducer to simulate an airflow when an aircraft is in flight. A central processing unit controls the stimuli generating instruments and applies the generated stimuli to the aircraft, wherein the response to the stimuli from the aircraft components and flight crew commands issued from the cockpit are monitored. Then, the aircraft test system generates an updated set of stimuli equal to the stimuli that would be received if the aircraft was moving through the air based on the response signals, and also records the output data from the aircraft components.

Further technological background can be found in documents US 3,885,759 A and US 3,067,832 A.

In order to guarantee a high fail safety, the operability of the nose wheel steering control units are to be checked in regular intervals. It is the object of the present invention to provide a method for checking the operability of a nose wheel steering control unit in an aircraft in an easy and time saving manner.

The object of the present invention is achieved by a method for checking the operability of a nose wheel steering control unit in an aircraft, having the features of claim 1.

Thus, by applying the method according to the invention, it can be checked whether the nose wheel indeed is blocked, when the nose wheel speed simulation signal exceeds the predetermined speed value.

The method according to the present invention may further comprise the steps of connecting the testing device to an external simulation system, in particular an airport operation system, which provides predetermined simulation procedures, and simulating certain operation scenarios based on the predetermined simulation procedures.

Moreover, the method according to the invention may further comprise the steps of connecting the testing device to a corresponding output port of the nose wheel steering control unit and checking the correctness of the output signal provided by the nose wheel steering control unit in response to the nose wheel speed simulation signal.

As already discussed above in view of the testing device, the method according to the invention may further comprise the steps of connecting the testing device to a further external component controlled by the nose wheel steering control unit and providing a simulated output signal, which is transmitted to the external component, for checking the operability of external component.

In addition or in alternative to that, the method according to the invention may further comprise the steps of connecting the testing device to a ground spoiler control unit and checking whether the ground spoiler control unit activates a ground spoiler after the predetermined speed value has been exceeded by the nose wheel speed simulation signal.

Furthermore, the method according to the invention may comprise the steps of connecting the testing device to an aircraft data monitoring device and checking whether the aircraft data monitoring device processes and indicates the received simulated data, appropriately.

According to a further embodiment, the method according to the invention may comprise the steps of connecting the testing device to a slat aileron control device and checking whether the slat aileron control device controls the slats and the aileron appropriately, after the predetermined speed value has been exceeded by the nose wheel speed simulation signal. Additionally, the method according to the invention may further comprise the steps of connecting the testing device to two separate slat aileron control devices provided in the aircraft and operating the two separate slat aileron control devices, synchronously, by using the testing device such that one of the slat aileron control devices operates in an activated command mode, when the respective other slat aileron control device operates in an monitoring mode, and vice versa.

A testing device will now be explained in more detail with reference to the accompanying drawings, in which:
- Fig. 1: shows a perspective schematic view of a testing device connected to a nose wheel steering control unit and
- Fig. 2: shows a top plan view of a manual user interface of the testing device.

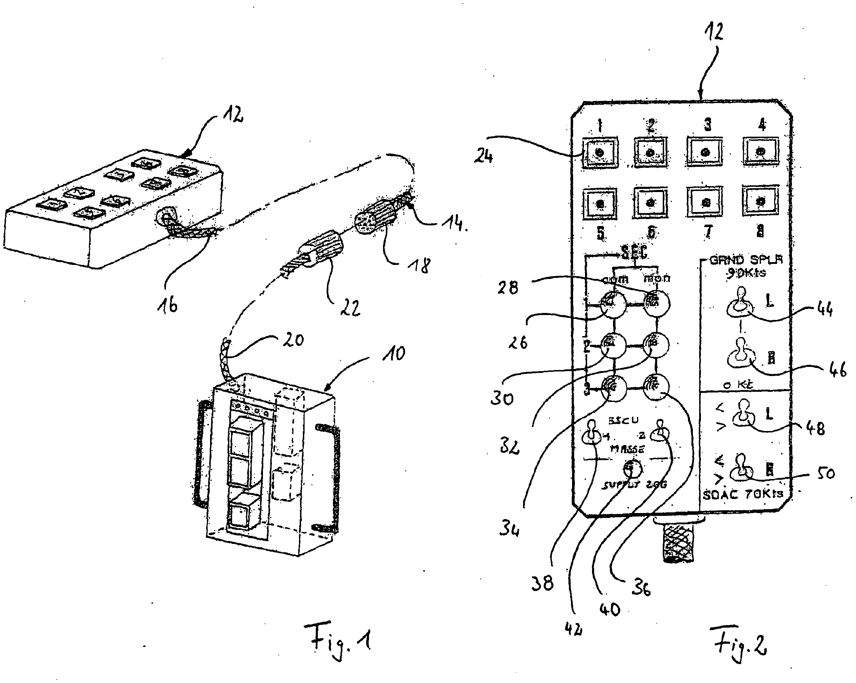

Fig. 1 shows a nose wheel steering control unit 10 and a testing device 12, which are connected to each other by means of a connection cable arrangement 14. The connection cable arrangement 14 includes two parts. A first part 16 is connected to the testing device and has a female plug connector 18. A second part 20 of the connecting cable 14 is connected to the nose wheel steering control unit 10 and includes a corresponding male plug connector 22. The plug connectors 18 and 22 include terminals associated to input and output ports of both the nose wheel 7019 steering control unit 10 and the testing device 12. It also includes power supply terminals for supplying power voltage to the testing device 12.

Fig. 2 shows a top plan view of the user interface of the testing device 12. The user interface includes in its upper third eight buttons 24-1, 24-2, 24-3, 24-4, 24-5, 24-6, 24-7 and 24-8. With these eight buttons it is possible to activate a simulation of one of eight speed sensors provided to detect the wheel speed of the nose steering wheel of an aircraft. For example by pressing button 24-1, the first speed sensor associated to the nose steering wheel of the aircraft is simulated whereas the other seven speed sensors are not simulated and deactivated. Thus, it is possible to provide a simulateted output signal generated by the testing device 12 and to transmit it via the cable 14 to the nose wheel steering control unit 10 in order to check the operability of the nose wheel steering control unit 10, in particular the response to the generated simulated speed sensor output signal of the testing device 12.

The testing device 12 moreover includes in the middle part on the left side of Fig. 2 optical indicators 26, 28, 30, 32, 34, 36. These optical indicators 26, 28, 30, 32, 34, 36 are used for showing, whether certain control units which are provided twice in the aircraft, are currently working in a command mode or in a monitoring mode. The indicators 26 to 36 particularly indicate which of the Slat Aileron Control Units (SEC) are currently working in a command mode or a monitoring mode. The testing device also simulates a signal (valet signal) for the Flight Management Computers (FMGC). This is due to the fact that in order to improve the fail safety, modern aircrafts usually comprise certain control units twice. When the first control unit works in the command mode, the second control unit having the same functions operates in the monitoring mode and monitors the operation of the control system. After each flight, for example, the tasks are interchanged with each other and the control unit having monitored the operation of the system then commands the respective system and the control unit having commanded the system then monitors the system. Thus, there is a predetermined order of operation, which also has to be checked with the testing device. This can be done by means of the indicators 26 to 36. By using the switches 38, 40, certain control units can be activated or deactivated. Moreover, there is a further optical indicator 42 for indicating, whether the power supply to the testing device is sufficient or not.

The testing device 12 is adapted to perform the testing function automatically by executing a predetermined routine, such that a operating person simply has to monitor, whether the output signals confirm the correct functioning of the tested nose wheel steering control unit or not. However, the testing device 12 also provides two switches 44 and 46 for checking the interaction between the nose wheel steering control unit 10 and a ground spoiler control unit manually. By activating switch 44 it is possible to check whether the ground spoiler control unit correctly responds to a signal coming from the nose wheel steering control unit, e.g. by activating the ground spoiler on the left side. The same applies for switch 46, which is provided for a manual activation of the ground spoiler control unit for controlling the ground spoiler on the right side.

The two switches 48 and 50 have a similar function. They are associated to an aircraft data monitoring device, e.g. a system data acquisition computer (SDAC). This aircraft data monitoring device outputs a certain signal, for example an optical signal, in the cockpit of the aircraft, as soon as the speed limit of 70 knots has been exceeded by the nose wheel of the aircraft. As soon as this predetermined nose wheel speed value has been exceeded, the nose steering is to be blocked in order to avoid an accident. For checking, whether the aircraft data monitoring device (SDAC) correctly recognizes an excess of this predetermined nose wheel speed value, one of the two switches 48 and 50 are to be switched on. Thereupon, a corresponding simulated signal is generated by the testing device 12 and transmitted to the aircraft data monitoring device. Thereupon it is checked, whether the aircraft data monitoring device reacts appropriately or not.

Summarizing the application and the use of the testing device 12, it is to be stated that it is easily connectable to the nose wheel steering control unit 10 and that it facilitates to check the operability of certain functions directly implemented in the nose wheel steering control unit 10 or initiated thereby, for example by outputting certain control signals.

## Claims

1. A method for checking the operability of a nose wheel steering control unit (10) in an aircraft, wherein the nose wheel steering control unit (10) has a plurality of input ports and a plurality of output ports, wherein at least one of the input ports of the nose wheel steering control unit (10) is connectable to a speed sensor which provides a signal representing the actual speed of the nose wheel of the aircraft and wherein the nose wheel steering control unit (10) outputs a blocking signal to be transmitted to a steering mechanism as soon as the detected actual speed of the nose wheel exceeds a predetermined nose wheel speed value, the method comprising the steps of:
- connecting a connection interface (14) of a testing device (12) according to one of the preceding claims to at least one input port of one of two separate nose wheel steering control units (10) provided in the aircraft the nose wheel steering control unit (10),
- generating a nose wheel speed simulation signal which represents a particular simulated nose wheel speed value exceeding the predetermined speed value,
- transmitting the generated nose wheel speed simulation signal to the nose wheel steering control unit (10) via the connection interface (14) while operating the two separate nose wheel steering control units (10), synchronously, by using the testing device (12) such that one of the nose wheel steering control units (10) operates in an activated command mode, in which the nose wheel steering control unit (10) in command mode commands the nose wheel steering control units (10), when the respective other nose wheel steering control unit (10) operates in an monitoring mode, in which the nose wheel steering control unit (10) in the monitoring mode monitors the operation of the nose wheel steering units (10), and
- monitoring the output of the nose wheel steering control units (10) in response to the received nose wheel speed simulation signal.

2. The method according to claim 1,
further comprising the steps of connecting the testing device (12) to an external simulation system, in particular an airport operation system, which provides predetermined simulation procedures, and simulating certain operation scenarios based on the predetermined simulation procedures,
and/or further comprising the steps of connecting the testing device (12) to a corresponding output port of the nose wheel steering control unit (10) and checking the correctness of the output signal provided by the nose wheel steering control unit (10) in response to the nose wheel speed simulation signal,
and/or further comprising the steps of connecting the testing device (12) to a further external component controlled by the nose wheel steering control unit (10) and providing a simulated output signal, which is transmitted to the external component, for checking the operability of external component,
and/or further comprising the steps of connecting the testing device (12) to a ground spoiler control unit and checking whether the ground spoiler control unit activates a ground spoiler after the predetermined speed value has been exceeded by the nose wheel speed simulation signal.

3. The method according to claim 1 or 2,
further comprising the steps of connecting the testing device (12) to an aircraft data monitoring device and checking whether the aircraft data monitoring device processes and indicates the received simulated data appropriately.

4. The method according to one of claims 1 to 3,
further comprising the steps of connecting the testing device (12) to a slat aileron control device and checking whether the slat aileron control device controls the slats and the aileron appropriately after the predetermined speed value has been exceeded by the nose wheel speed simulation signal.

5. The method according to claim 4,
further comprising the steps of connecting the testing device (12) to two separate slat aileron control devices provided in the aircraft and operating the two separate slat aileron control devices, synchronously, by using the testing device (12) such that one of the slat aileron control devices operates in an activated command mode when the respective other slat aileron control devices operates in an monitoring mode.

## Patentansprüche

1. Verfahren zum Prüfen der Betriebsfähigkeit einer Bugradlenk-Steuerungseinheit (10) in einem Flugzeug, wobei die Bugradlenk-Steuerungseinheit (10) eine Vielzahl von Eingangskanälen und eine Vielzahl von Ausgangskanälen aufweist, wobei wenigstens einer der Eingangskanäle der Bugradlenk-Steuerungseinheit (10) mit einem Geschwindigkeitssensor verbindbar ist, der ein die Ist-Geschwindigkeit des Bugrads des Flugzeugs repräsentierendes Signal bereitstellt, und wobei die Bugradlenk-Steuerungseinheit (10) ein Sperrsignal ausgibt, das zu einem Lenkmechanismus übertragen wird, sobald die erfasste Ist-Geschwindigkeit des Bugrads einen vorbestimmten Bugradgeschwindigkeitswert überschreitet, wobei das Verfahren die Schritte aufweist:
- Verbinden einer Verbindungsschnittstelle (14) einer Prüfvorrichtung (12) mit wenigstens einem Eingangskanal einer der beiden voneinander getrennten Bugradlenk-Steuerungseinheiten (10), die in dem Flugzeug vorgesehen sind,
- Erzeugen eines Bugradgeschwindigkeits-Simulationssignals, das einen bestimmten simulierten Bugradgeschwindigkeitswert darstellt, der den vorbestimmten Geschwindigkeitswert überschreitet,
- Übertragen des erzeugten Bugradgeschwindigkeits-Simulationssignals zu der Bugradlenk-Steuerungseinheit (10) über die Verbindungsschnittstelle (14), während des synchronen Betriebs der beiden getrennten Bugradlenk-Steuerungseinheiten (10) unter Verwendung der Prüfvorrichtung (12) derart, dass eine der beiden Bugradlenk-Steuerungseinheiten (10) in einem aktivierten Befehlsmodus betrieben wird, in dem die Bugradlenk-Steuerungseinheit (10) im Befehlsmodus die Bugradlenk-Steuerungseinheiten (10) steuert, wenn die entsprechend andere Bugradlenk-Steuerungseinheit (10) in einem Überwachungsmodus arbeitet, in dem die Bugradlenk-Steuerungseinheit (10) in dem Überwachungsmodus den Betrieb der Bugradlenk-Steuerungseinheiten (10) überwacht, und
- Überwachen der Ausgabe der Bugradlenk-Steuerungseinheiten (10) in Antwort auf das empfangene Bugradgeschwindigkeits-Simulationssignal.

2. Verfahren nach Anspruch 1,
ferner aufweisend die Schritte: Verbinden der Prüfvorrichtung (12) mit einem externen Simulationssystem, insbesondere mit einem Flughafenbetriebssystem, das vorbestimmte Simulationsverfahren bereitstellt und verschiedene Betriebsszenarien basierend auf den vorbestimmten Simulationsverfahren simuliert,
und/oder ferner aufweisend die Schritte: Verbinden der Prüfvorrichtung (12) mit einem entsprechenden Ausgangskanal der Bugradlenk-Steuerungseinheit (10) und Prüfen der Richtigkeit der ausgegebenen Signale, die von der Bugradlenk-Steuerungseinheit (10) in Antwort auf das Bugradgeschwindigkeits-Simulationssignal ausgegeben werden, und/oder ferner aufweisend die Schritte: Verbinden der Prüfvorrichtung (12) mit einer weiteren externen Komponente, die durch die Bugradlenk-Steuerungseinheit (10) gesteuert wird, und ein simuliertes Ausgabesignal bereitstellt, dass zu der externen Komponente zum Prüfen der Betriebsfähigkeit der externen Komponente übertragen wird,
und/oder ferner aufweisend die Schritte: Verbinden der Prüfvorrichtung (10) mit einer Bodenbremsklappen-Steuerungseinheit und Prüfen, ob die Bodenbremsklappen-Steuerungseinheit eine Bodenbremsklappe nach dem Überschreiten des vorbestimmten Geschwindigkeitswerts durch das Bugradgeschwindigkeits-Simulationssignal aktiviert.

3. Verfahren nach Anspruch 1 oder 2,
ferner aufweisend die Schritte: Verbinden der Prüfvorrichtung (12) mit einer Flugzeugdaten-Überwachungsvorrichtung und Prüfen, ob die Flugzeugdaten-Überwachungsvorrichtung die empfangenen simulierten Daten passend verarbeitet und anzeigt.

4. Verfahren nach einem der Ansprüche 1 bis 3,
ferner aufweisend die Schritte: Verbinden der Prüfvorrichtung (12) mit einer Vorflügel-Querruder-Steuerungsvorrichtung und Prüfen, ob die Vorflügel-Querruder-Steuerungsvorrichtung die Vorflügel und das Querruder nach Überschreiten des vorbestimmten Geschwindigkeitswerts durch das Bugradgeschwindigkeits-Simulationssignal passend steuert.

5. Verfahren nach Anspruch 4,
ferner aufweisend die Schritte: Verbinden der Prüfvorrichtung (12) mit zwei getrennten Vorflügel-Querruder-Steuerungsvorrichtungen, die in dem Flugzeug vorgesehen sind und synchrones Betreiben der beiden getrennten Vorflügel-Querruder-Steuerungsvorrichtungen durch Verwendung der Prüfvorrichtung (12) derart, dass eine der Vorflügel-Querruder-Steuerungsvorrichtungen in einem aktivierten Befehlsmodus arbeitet, wenn die entsprechend andere Vorflügel-Querruder-Steuerungsvorrichtung in einem Überwachungsmodus arbeitet.

## Revendications

1. Procédé de contrôle de l'opérabilité d'une unité de commande de direction de train avant (10) dans un aéronef, dans lequel l'unité de commande de direction de train avant (10) comporte une pluralité d'accès d'entrée et une pluralité d'accès de sortie, dans lequel au moins l'un des accès d'entrée de l'unité de commande de direction de train avant (10) peut être connecté à un capteur de vitesse qui délivre signal représentant la vitesse réelle du train avant de l'aéronef et dans lequel l'unité de commande de direction de train avant (10) délivre en sortie un signal de blocage devant être transmis à un mécanisme de direction dès que la vitesse réelle détectée du train avant dépasse une valeur de vitesse de train avant prédéterminée, le procédé comprenant les étapes consistant à :
- connecter une interface de connexion (14) d'un dispositif de test (12) à au moins un accès d'entrée de l'une des deux unités de commande de direction de train avant séparées (10) prévues dans l'unité de commande de direction de train avant de l'aéronef (10),
- générer un signal de simulation de vitesse de train avant qui représente une valeur de vitesse de train avant simulée particulière dépassant la valeur de vitesse prédéterminée,
- transmettre le signal de simulation de vitesse de train avant généré vers l'unité de commande de direction de train avant (10) via l'interface de connexion (14) tout en actionnant les deux unités de commande de direction de train avant séparées (10), de manière synchrone, en utilisant le dispositif de test (12) d'une manière telle que l'une des unités de commande de direction de train avant (10) fonctionne dans un mode commande activé, dans lequel l'unité de commande de direction de train avant (10) dans le mode commande commande les unités de commande de direction de train avant (10), lorsque l'autre unité de commande de direction de train avant respective (10) fonctionne dans un mode contrôle, dans lequel l'unité de commande de direction de train avant (10) dans le mode contrôle contrôle le fonctionnement des unités de direction de train avant (10), et
- contrôler la sortie des unités de commande de direction de train avant (10) en réponse au signal de simulation de vitesse de train avant reçu.

2. Procédé selon la revendication 1,
comprenant en outre les étapes consistant à connecter le dispositif de test (12) à un système de simulation externe, en particulier un système de fonctionnement aéroportuaire, qui fournit des procédures de simulation prédéterminées, et simuler certains scénarios de fonctionnement sur la base des procédures de simulation prédéterminées,
et/ou comprenant en outre les étapes consistant à connecter le dispositif de test (12) à un accès de sortie correspondant de l'unité de commande de direction de train avant (10) et contrôler l'exactitude du signal de sortie délivré par l'unité de commande de direction de train avant (10) en réponse au signal de simulation de vitesse de train avant,
et/ou comprenant en outre les étapes consistant à connecter le dispositif de test (12) à un autre élément externe commandé par l'unité de commande de direction de train avant (10) et délivrer un signal de sortie simulé, qui est transmis vers l'élément externe, pour contrôler l'opérabilité de l'élément externe,
et/ou comprenant en outre les étapes consistant à connecter le dispositif de test (12) à une unité de commande de déporteur sol et contrôler si l'unité de commande de déporteur sol active un déporteur sol après que la valeur de vitesse prédéterminée ait été dépassée par le signal de simulation de vitesse de train avant.

3. Procédé selon la revendication 1 ou 2,
comprenant en outre les étapes consistant à connecter le dispositif de test (12) à un dispositif de contrôle de paramètres de bord et contrôler si le dispositif de contrôle des paramètres de bord traite et indique les données simulées reçues de manière appropriée.

4. Procédé selon l'une quelconque des revendications 1 à 3,
comprenant en outre les étapes consistant à connecter le dispositif de test (12) à un dispositif de commande d'aileron/de bec de bord d'attaque et contrôler si le dispositif de commande d'aileron/de bec de bord d'attaque commande les becs de bord d'attaque et l'aileron de manière appropriée après que la valeur de vitesse prédéterminée ait été dépassée par le signal de simulation de vitesse de train avant.

5. Procédé selon la revendication 4,
comprenant en outre les étapes consistant à connecter le dispositif de test (12) à deux dispositifs de commande d'aileron/de bec de bord d'attaque prévus dans l'aéronef et actionner les deux dispositifs de commande d'aileron/de bec de bord d'attaque séparés, de manière synchrone, en utilisant le dispositif de test (12) d'une manière telle que l'un des dispositifs de commande d'aileron/de bec de bord d'attaque fonctionne dans un mode commande activé lorsque l'autre dispositif de commande d'aileron/de bec de bord d'attaque respectif fonctionne dans un mode contrôle.
